# EUROPÄISCHE PATENTSCHRIFT

(11) **EP 0 456 966 B1**
(45) Veröffentlichungstag und Bekanntmachung des Hinweises auf die Patenterteilung: **16.03.1994**
(21) Anmeldenummer: 91102058.4
(22) Anmeldetag: 14.02.1991
(51) Int. Cl.: H01M 10/52

(54) **Bleiakkumulator mit einer Vorrichtung zur katalytischen Rekombination der Elektrolysegase**
Lead accumulator with device for the catalytic recombination of gases formed by electrolysis
Accumulateur au plomb à dispositif pour la recombinaison catalytique des gaz d'électrolyse

(30) Priorität: 12.05.1990 DE 4015370
(43) Veröffentlichungstag der Anmeldung: 21.11.1991
(73) Patentinhaber: VARTA Batterie Aktiengesellschaft, D-30405 Hannover (DE)
(72) Erfinder: Gütlich, Karl-Friedich, Dr. Dipl. Phys., W-6000 Frankfurt am Main 70 (DE); Kraft, Helmut, W-6237 Liederbach/Ts. (DE)
(74) Vertreter: Kaiser, Dieter Ralf, Dipl.-Ing.

(56) Entgegenhaltungen:
- DE-A- 3 437 479
- FR-A- 2 160 543
- US-A- 4 810 598
- PATENT ABSTRACTS OF JAPAN vol. 7, no. 58 (E-163)(1203) 10. März 1983& JP-A-57 205 975 (YUASA DENCHI K.K.) 17. December 1982

## Beschreibung

Die Erfindung betrifft einen Bleiakkumulator mit einer Vorrichtung zur katalytischen Rekombination der Elektrolysegase, welche aus mehreren Schichten besteht, von denen zumindest eine mit einem Katalysatormaterial imprägniert ist, und die in einem metallischen Gehäuse angeordnet ist.

Ein wartungsarmer Betrieb von Bleiakkumulatoren wird beispielsweise durch Rekombinatoren ermöglicht, welche die sowohl beim Laden als auch während der Standzeiten anfallenden Wasserstoff- und Sauerstoffgase wieder zu Wasser umsetzen und dieses größtenteils für den Elektrolyten zurückgewinnen.

Es ist eine große Zahl von Rekombinationsvorrichtungen bekannt. Meistens sind sie im Verschlußstopfen für die Säureeinfüllöffnung untergebracht oder verfügen außerhalb des Akkumulators über ein eigenes Gehäuse. In diesem befindet sich ein mit dem Katalysatormaterial besetzter Träger, welcher von den Akkumulatorgasen angeströmt wird. Der Träger kann aus hydrophobierten mineralischen Stoffen wie Asbestfasern bestehen, in welche der Katalysator in Form von Körpern oder Kügelchen eingebracht ist; oder er kann, z. B. gemäß DE-PS 31 22 659, aus einer wasserabstoßenden Aktivkohlematte bestehen, welche infolge einer Imprägnierungsbehandlung mit einer PdCl₂-Lösung und anschließender thermischer Zersetzung des Palladiumsalzes eine Einbettung von fein verteiltem, hochaktiven Palladiummetall besitzt. Der Katalysatorträger ist vorzugsweise flächenhaft ausgebildet, weil dadurch der Abfluß der bei der chemischen Rekombination von Wasserstoff und Sauerstoff frei werdenden Wärmeenergie begünstigt wird.

Zu einer besseren Wärmeabgabe an die Umgebung trägt aber auch die externe Anordnung des Rekombinators bei, insbesondere dann, wenn wie bei dem Verschlußstopfen gemäß DE-PS 24 42 465 ein enger flächiger Kontakt zwischen dem Katalysator und einem Teil des Rekombinatorgehäuses besteht. Über diesen Kontakt fließt vorzugsweise die Rekombinationswärme direkt an die Umgebungsluft ab, während zum Auffangen der Kondensationswärme aus dem sich niederschlagenden Wasserdampf kühlere Bereiche des Gehäuses vorgesehen sind.

Der günstige, weil differenzierte Wärmeaustausch dieses bekannten Verschlußstopfens mit seiner Umgebung wird hier durch eine voluminöse Gehäusekonstruktion erkauft. Im Gegensatz dazu läßt sich der DE-PS 23 40 945 eine wesentlich kompaktere Rekombinationsstopfen-Ausführung mit einem schichtförmigen Aufbau von Asbestgeweben in einem zylindrischen Gehäuse entnehmen.

Der Erfindung liegt die Aufgabe zugrunde, einen rekombinierenden, wartungsfreien Bleiakkumulator verfügbar zu machen, der trotz der Rekombinationseinrichtung keine sperrigen Außenteile besitzt, welche seine Stapelbarkeit behindern, und bei welchem ein guter Wärmeabfluß aus dem Katalysator sichergestellt ist.

Die Aufgabe wird erfindungsgemäß durch einen Bleiakkumulator gelöst, wie er im Patentanspruch 1 definiert ist.

Danach ist bei dem erfindungsgemäßen Akkumulator die Rekombinationseinrichtung in das Gehäuseinnere, nämlich in den Raum oberhalb der Plattensätze verlegt, wobei die Einrichtung eine beidseitig offene Metallhülse mit stapelförmig darin angeordneten Schichten umfaßt, von denen die in der Mitte befindliche Schicht oder aber eine auf jeder Seite von mindestens einer weiteren Schicht abgedeckte Schicht eine Katalysatorschicht ist.

Anhand einer Figur wird der Gegenstand der Erfindung in einer vorzugsweisen Ausführungsform erläutert.

In die Metallhülse 1 sind mehrere poröse Scheiben aus einem säureresistenten Material, z. B. aus einer Mineralfasermatte, einem Filz, einem gepreßten Kohlepulver oder einem Walzband aus dergleichen pulverförmigen Stoffen, eingebracht und bilden dort in stapelförmiger Anordnung die Schichten 2, 3, von denen die endständigen Schichten 3 den offenen Enden der Hülse am nächsten liegen. Die Metallhülse selbst ist im Akkumulator vorzugsweise so orientiert, daß die Schichten im wesentlichen senkrecht zur Standfläche des Akkumulators stehen. Dies ist für den Rekombinationsbetrieb vorteilhaft, damit sich auf diesen kein Wasser sammeln kann.

Die in der Mitte des Stapels befindliche Schicht 2 ist die Katalysatorschicht, beispielsweise aus einer mit Palladiummetall imprägnierten Aktivkohlematte gebildet. Die Schichten 3 wirken als Diffusionsschichten, indem sie die von beiden Seiten in die Hülse eindringenden Akkumulatorgase gleichmäßig über die Katalysatorschicht verteilen. Sie können ebenfalls durch Aktivkohlematten gebildet sein und sind wie die Katalysatorschicht hydrophobiert. Bewährtes Mittel zur Hydrophobierung der Matten ist beispielsweise eine Polytetrafluorethylendispersion.

Es liegt selbstverständlich im Rahmen der Erfindung, den der Katalysatormatte vorgelagerten Schichten, die ohnehin auch als Säureabscheider fungieren, durch entsprechende Präparierung weitere Aufgaben zuzuweisen. So können diese Schichten beispielsweise eine Imprägnierung von Kupferoxid erhalten, wodurch sie befähigt sind, Antimonwasserstoff, der in einem Akkumulator mit antimonhaltigen Bleilegierungen entsteht, zu oxidieren und damit eine Vergiftung des Edelmetallkatalysators zu verhindern.

Ein Fixierring 4 aus einem säurefesten, harten Kunststoff schützt die Schichten vor einer Verformung während des Einkrimpens der Hülse an diesem Ende. Der Fixierring seinerseits kann mit einem dünnwandigen hülsenförmigen Fortsatz ausgebildet sein, der den Schichtenstapel umhüllt.

Erfindungsgemäß ist die Hülse, deren Form durchaus auch von einer zylindrischen abweichen kann, im Innenraum des Akkumulatorgehäuses, oberhalb der Plattenstapel positioniert. Besonders günstig ist es, sie unmittelbar auf einer der Polbrücken 5 anzuordnen, wo sie in gutem wärmeleitenden Kontakt zu dem Brückenmetall steht. Auf diese Weise ist eine besonders intensive Abführung der Rekombinationswärme aus dem Katalysator möglich.

Wegen der notwendigen festen mechanischen Verbindung mit einer Polbrücke ist es besonders günstig, als metallisches Hülsenmaterial Blei oder eine Bleilegierung zu wählen, so daß die Hülse problemlos durch Anschweißen oder durch eine Klammer auf der Polbrücke angebracht werden kann.

In einer anderen vorteilhaften Ausführungsform der Erfindung kann die Hülse integraler Bestandteil einer Polbrücke sein, indem Polbrücke und Hülse ein einstückiges Formteil bilden. Ein sehr wichtiger Vorteil der Erfindung ergibt sich auch daraus, daß wegen der mechanischen Anbindung des Rekombinators an die Polbrücke über sein elektrisch leitendes Gehäuse einer möglichen statischen Aufladung vorgebeugt wird, die zu einer Zündung der zündfähigen Gase führen könnte. Zum anderen trägt die Anordnung des Rekombinators im Innern der Zelle bereits dazu bei, daß das zündfähige Gasgemisch schon am Ort seiner Entstehung eliminiert wird.

Zur Rückführung des bei der Rekombination entstehenden Wassers bedarf es keines mit dem Elektrolyten in Verbindung stehenden Dochtes oder der Einrichtung von Rückflußkanälen, die den konstruktiven Aufbau bekannter Rekombinatoren in vielen Fällen belasten. Bei dem Rekombinator gemäß der Erfindung sorgt vielmehr der kurze Diffusionsweg zwischen der Katalysatorschicht und den offenen Enden der Hülse dafür, daß das Rekombinationswasser noch in Dampfform die weiten Öffnungen der Hülse verläßt und die Gefahr einer Rückfeuchtung der Matten beim Erkalten des Katalysators durch Kondensatbildung im unmittelbaren Einzugsbereich der Hülse entfällt. Durch die erfindungsgemäße Anordnung der Rekombinationsvorrichtung im Innern des Akkumulatorgehäuses steht dem gebildeten Wasserdampf die gesamte Innenwand des Gehäuses oberhalb des Elektrolytspiegels als Kondensationsfläche zur Verfügung. Die Rückgewinnung des durch Elektrolyse zersetzten Wassers findet direkt in der Zelle statt.

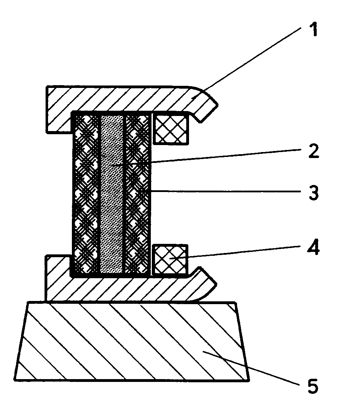

## Patentansprüche

1. Bleiakkumulator mit einer Vorrichtung zur katalytischen Rekombination der Elektrolysegase, welche aus mehreren Schichten besteht, von denen zumindest eine mit einem Katalysatormaterial Imprägniert ist, und die in einem metallischen Gehäuse angeordnet ist, dadurch gekennzeichnet, daß die Katalysatorschicht beidseitig von Diffusionsschichten umgeben ist, daß der Schichtenstapel in einer zu beiden Seiten offenen metallischen Hülse enthalten ist und daß die Hülse innerhalb des Akkumulatorgehäuses im Raum oberhalb der Plattensätze angeordnet ist.

2. Bleiakkumulator nach Anspruch 1, dadurch gekennzeichnet, daß das Hülsenmaterial Blei oder eine Bleilegierung ist.

3. Bleiakkumulator nach Anspruch 2, dadurch gekennzeichnet, daß die Hülse mit einer der Polbrücken fest verbunden ist.

4. Bleiakkumulator nach Anspruch 2 oder 3, dadurch gekennzeichnet, daß die Hülse integraler Bestandteil einer Polbrücke ist.

## Claims

1. Lead accumulator having a device for the catalytic recombination of the gases formed by electrolysis, which comprises a plurality of layers whereof at least one is impregnated with a catalyst material, and which is arranged in a metal housing, characterized in that the catalyst layer is surrounded on both sides by diffusion layers, in that the stack of layers is contained in a metal case which is open on both sides, and in that the case is arranged within the accumulator housing in the space above the sets of plates.

2. Lead accumulator according to Claim 1, characterized in that the case material is lead or a lead alloy.

3. Lead accumulator according to Claim 2, characterized in that the case is firmly connected to one of the terminal bars.

4. Lead accumulator according to Claim 2 or 3, characterized in that the case is an integral part of a terminal bar.

## Revendications

1. Accumulateur au plomb avec un dispositif pour la recombinaison catalytique des gaz d'électrolyse, dispositif qui est constitué de plusieurs couches dont au moins une est imprégnée avec un matériau catalyseur, et qui est disposé dans un boîtier métallique, accumulateur caractérisé en ce que la couche de catalyseur est entourée des deux côtés par des couches de diffusion, en ce que l'empilement des couches est contenu dans une douille métallique ouverte des deux côtés, et en ce que cette douille est disposée à l'intérieur du bac d'accumulateur dans l'espace au-dessus des jeux de plaques.

2. Accumulateur au plomb selon la revendication 1, caractérisé en ce que le matériau de la douille est le plomb ou un alliage de plomb.

3. Accumulateur au plomb selon la revendication 2, caractérisé en ce que la douille est fermement reliée à un des ponts polaires.

4. Accumulateur au plomb selon la revendication 2 ou la revendication 3, caractérisé en ce que la douille est une partie constituante intégrale d'un pont polaire.
